# EUROPEAN PATENT APPLICATION

(11) **EP 4 541 698 A1**
(43) Date of publication of application: **23.04.2025**
(21) Application number: 23204513.8
(22) Date of filing: 19.10.2023
(51) Int. Cl.: B62D 37/02

(54) **SMART CONTROL OF ACTIVE AERODYNAMIC DEVICES**

(71) Applicant: Wuhan Lotus Cars Co., Ltd., Wuhan, Hubei (CN)
(72) Inventor: Fares, Ehab, 64673 Zwingenberg (DE)
(74) Representative: Elzaburu S.L.P.

(57) **Abstract**

A method (200; 400) of operating a vehicle system (110) of a vehicle (100) comprises determining (210; 410), by means of the vehicle system (110), an imminent driving situation of the vehicle (100) based at least partially on sensor data obtained by the vehicle system (110), and determining (220; 420), by means of the vehicle system (110), an expected behavior of a driver (D) of the vehicle (100) with respect to the imminent driving situation based at least partially on the imminent driving situation using a trained algorithm, the trained algorithm trained based at least partially on previous driving situations and previous behaviors of the driver (D). The method (200; 400) further comprises determining (230; 430), by means of the vehicle system (110), a target setting of at least one active aerodynamic device (140) of the vehicle (100) based at least partially on the imminent driving situation and the expected behavior of the driver (D), and controlling (240; 440), by means of the vehicle system (110), the at least one active aerodynamic device (140) in accordance with the determined target setting of the at least one active aerodynamic device (140).

## Description

The present application relates to a method of operating a vehicle system of a vehicle in connection with one or more active aerodynamic devices of the vehicle. The present application further relates to a computer program product, a vehicle system and a vehicle.

### Background

Aerodynamic devices for vehicles, such spoilers, diffusers, and the like, are suited to improve a vehicle's performance under specific conditions. For example, when a vehicle is moved at high velocities, aerodynamic devices of the aforesaid types can enhance a downward pressure of the vehicle, thus allowing for improved traction and steerability of the vehicle. However, these advantages come at the expense of an increased drag, which causes increased energy consumption and, thus, renders an operation of the vehicle less economic. Furthermore, the advantages brought about by a rigid aerodynamic device may not be needed or not desired in many typical driving situations.

Active aerodynamic devices are known. They allow for adjusting an aerodynamic device, for example, in accordance with a driver's choice, such as a selected drive mode, or a detected vehicle condition, such as a detected velocity of the vehicle, etc. For this purpose, an active aerodynamic device, such as an active rear spoiler, an active rear diffuser, or the like, typically comprises one or more controllable actuators which allow for automatically changing a position of the aerodynamic device.

In KR 101632148 B1 it has been proposed to automatically adjust a position of an active rear spoiler in accordance with route information obtained by means of a navigation functionality of the vehicle.

There is a need for improved operation of a vehicle system in connection with one or more active aerodynamic devices of the vehicle.

### Summary of the Invention

Accordingly, there is provided a method according to claim 1, a computer program product according to claim 13, a vehicle system according to claim 14, and a vehicle according to claim 15.

According to a first aspect, a method of operating a vehicle system of a vehicle is provided. The method comprises determining, by means of the vehicle system, an imminent driving situation of the vehicle based at least partially on sensor data obtained by the vehicle system. The method further comprises determining, by means of the vehicle system, an expected behavior of a driver of the vehicle with respect to the imminent driving situation based at least partially on the imminent driving situation using a trained algorithm, the trained algorithm trained based at least partially on previous driving situations and previous behaviors of the driver. The method further comprises determining, by means of the vehicle system, a target setting of at least one active aerodynamic device of the vehicle based at least partially on the imminent driving situation and the expected behavior of the driver, and controlling, by means of the vehicle system, the at least one active aerodynamic device in accordance with the determined target setting of the at least one active aerodynamic device.

By determining an imminent driving situation of the vehicle and an expected behavior of the driver using a trained algorithm, wherein the algorithm has been trained based on previous behaviors of the driver and previous driving situations, predictive control of the active aerodynamic device is facilitated. In this way, improved adjustment of the active aerodynamic device to the imminent driving situation is enabled, in particular, since an adjustment time of the at least one active aerodynamic device for adopting a position in accordance with a control signal can be partially or fully compensated.

Moreover, improved control of the active aerodynamic device is enabled in accordance with the driver's individual preferences and/or habits with respect to the imminent driving situation. In particular, the driver's individual preferences and/or habits can be derivable from previous behaviors of the driver in previous driving situations and can underly the trained algorithm. The driver's convenience can thus be improved.

Moreover, improved control of the active aerodynamic device is also enabled in that a vehicle state of the vehicle in the imminent driving situation can be predicted more accurately. This applies, as the vehicle state at a time of the imminent driving situation depends on the driver's behavior prior to and/or during the imminent driving situation. Accordingly, adjustment of the at least one active aerodynamic device can be performed in a predictive manner in accordance with a most likely vehicle state of the vehicle during the imminent driving situation. An effectiveness of the active aerodynamic device can thus be increased.

The method may further comprise determining, by means of the vehicle system, a present vehicle state of the vehicle. At least one of determining the imminent driving situation, determining the expected behavior of the driver and/or determining the target setting of the at least one active aerodynamic device may further be performed based at least partially on the present vehicle state of the vehicle. The present vehicle state of the vehicle can be at least partially defined by a present behavior of the driver, in particular by one or more present control input actions, such as a present steering input and/or a present acceleration/deceleration input, provided by the driver to the vehicle system. In addition, or as an alternative, the present vehicle state of the vehicle can be at least partially defined by a present configuration, in particular a present position, of the at least one active aerodynamic device.

A present vehicle state of the vehicle may be partially indicative of the imminent driving situation, a likely imminent behavior of the driver and/or a range of achievable configurations of the at least one active aerodynamic device. Thus, taking in account the present vehicle state of the vehicle enables a more accurate, more reliable and/or more effective determination of the imminent driving situation, of the expected behavior of the driver and/or of the target setting of the at least one active aerodynamic device.

The present vehicle state may comprise a selectable drive mode of the vehicle. The drive mode may be selected from a group of drive modes including at least one of economy, comfort, sport and/or racing. A selected drive mode can be indicative of one or more current preferences of the driver and/or of one or more functionalities of the vehicle which are activated or deactivated depending on a selected drive mode. Thus, taking in account a drive mode of the vehicle also enables a more accurate, more reliable and/or more effective determination of the imminent driving situation, of the expected behavior of the driver and/or of the target setting of the at least one active aerodynamic device.

The method may further comprise detecting, by means of the vehicle system, a behavior of the driver with respect to the imminent driving situation, and updating, by means of the vehicle system, the trained algorithm based on the detected behavior of the driver. In this way, continuous training of the trained algorithm is enabled. More accurate, more reliable and/or more effective determination of the imminent driving situation, of the expected behavior of the driver and/or of the target setting of the at least one active aerodynamic device is thus facilitated.

The trained algorithm may be stored by means of an on-board device, in particular by means of a storage device of an on-board control unit, of the vehicle system. Determining, by means of the vehicle system, the expected behavior of the driver with respect to the imminent driving situation using the trained algorithm may be performed by means of the on-board device, in particular by means of a processor of the on-board control unit. In this way, a fully vehicle-based implementation of the method is enabled, which dispenses with a permanent connection of the vehicle to a communication network when the method is performed.

The method may further comprise receiving, via a communication module of the vehicle system, updated algorithm data for the trained algorithm, and updating, by means of the on-board device, the trained algorithm in accordance with the received updated algorithm data. The updated algorithm data may pertain to at least one of the following: one or more updated types of driving situations, or updated classifying data for analyzing the obtained sensor data with respect to one or more driving situations.

The term "active aerodynamic device", as used herein, denotes any type of actively movable structure which influences the aerodynamics of the vehicle, wherein moving the actively moveable structure changes an influence which the actively moveable structure has on the aerodynamics of the vehicle. The at least one active aerodynamic device may in particular comprise at least one of an active rear spoiler, an active grille shutter, an active underbody front device, an active ride height and/or an active rear diffuser of the vehicle.

The target setting of the at least one active aerodynamic device can correspond to a target position of the at least one active aerodynamic device. Controlling the at least one active aerodynamic device in accordance with the determined target setting can comprise adjusting a variable position of the at least one active aerodynamic device in accordance with the target setting.

The method may be performed repeatedly, at least with respect to any of the determining-steps and the controlling-step. In this way, in successive cycles of performing the method, a behavior of the driver in reaction to a controlling of the at least one active aerodynamic device during a first cycle can be considered in determining the imminent driving situation, the expected behavior of the driver and/or the target setting of the at least one active aerodynamic device during one or more subsequent cycles. This also facilitates an implementation of the method as a 'closed loop', wherein the at least one active aerodynamic device is controlled dependent on an expected behavior of the driver, and an expected behavior of the driver is dependent on a preceding control of the at least one active aerodynamic device.

Furthermore, an imminence of the imminent driving situation, that is, a period from the moment at which the imminent driving situation has been determined until the moment at which the imminent driving situation sets in, may correspond to a period which allows for at least two cycles of performing the method. Thus, the imminent driving situation, the expected behavior of the driver and/or the target setting of the at least one active aerodynamic device as determined during a first cycle can be considered in determining the imminent driving situation, the expected behavior of the driver and/or the target setting of the at least one active aerodynamic device during one or more subsequent cycles before the imminent driving situation determined during the first cycle has set in and/or before the at least one active aerodynamic device has adopted a configuration in accordance with the controlling during the first cycle. This allows for recursive measures, enabling improved smoothness, improved consistency and/or readjustments between one or more successive target settings for the at least one active aerodynamic device.

The sensor data may be obtained from at least one sensor of the vehicle system, the at least one sensor comprising at least one of a position sensor, a camera, a lidar sensor, a radar sensor and/or an ultrasound sensor.

Any one of the imminent driving situation and the previous driving situations may be associated with one or more of a road trajectory, a road condition, a side wind condition, a time of day, a weather condition, a traffic situation, an environment, in particular a topographic environment, a vehicle state, in particular any of various possible settings of the at least one active aerodynamic device, and/or a driver state.

Any one of the expected behavior and the previous behaviors of the driver may include at least one of an activity and/or a preference of the driver.

Determining the expected behavior of the driver based at least partially on the imminent driving situation may comprise determining the expected behavior of the driver based at least partially on any of various possible settings of the at least one active aerodynamic device.

Determining the target setting of the at least one active aerodynamic device may be further performed based on a stored adjustment time of the at least one active aerodynamic device for adopting a position in accordance with a received control signal.

According to another aspect, a computer program product is provided. The computer program product comprises portions of program code which, when executed by a processor of a vehicle system of a vehicle, configure the vehicle system to perform the method as presently provided.

According to another aspect, a vehicle system is provided. The vehicle system comprises a processor and a storage device operatively coupled to the processor, wherein the storage device comprises portions of program code which, when executed by the processor, cause the vehicle system to perform the method as presently provided.

According to another aspect, a vehicle is provided. The vehicle comprises a vehicle system as presently provided.

### Brief Description of the Figures

Further details, advantages and objectives of the invention become apparent from the drawings and the detailed description. There is shown in the drawings:
- Fig. 1: a vehicle with a vehicle system according to an example;
- Fig. 2: a flow diagram of a method of operating a vehicle system according to an example
- Fig. 3: a control unit for a vehicle according to an example;
- Fig. 4: a flow diagram of a method of operating a vehicle system according to another example.

### Detailed Description

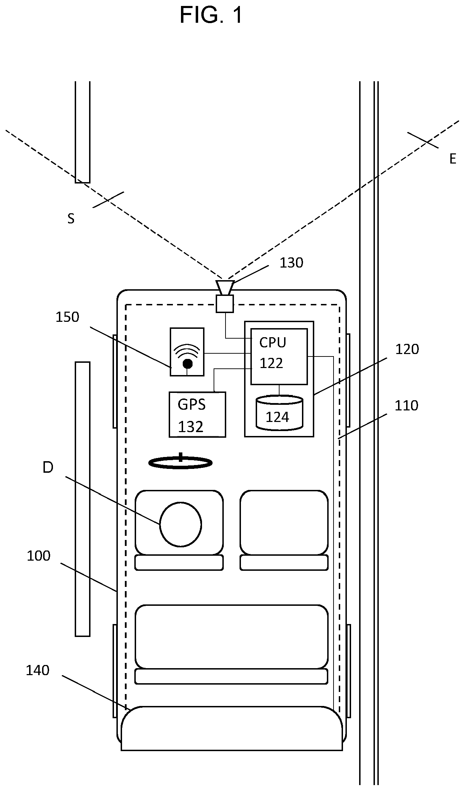

Fig. 1 shows schematically and exemplarily a vehicle 100. The vehicle 100 comprises a vehicle system 110. The vehicle system 110 includes a control unit 120, which comprises a processor 122 and a data storage device 124 operatively connected to the processor 122. The vehicle system 110 further comprises one or more sensors 130, 132, such as front camera 130 and position sensor 132. The vehicle system 110 further comprises at least one active aerodynamic device 140, for example, an active rear spoiler.

In the shown example, the vehicle system 110 also comprises a communication unit 150 adapted to receive communication signals, for example, radio signals, over a communication network to which the vehicle system 110 is connected. The sensors 130, 132, the active aerodynamic device 140, and the communication unit 150 are operatively connected to the control unit 120.

The sensors 130, 132 are adapted to detect one or more conditions which are indicative of an imminent driving situation of the vehicle 100. In the shown example, the front camera 130 is adapted to detect objects, including a trajectory or a course of a road S on which the vehicle 100 is moving, a road condition, an environment E, etc., which are located ahead of the vehicle 100, as indicated in Fig. 1 by the dashed lines originating from the front camera 130. In addition, the position sensor 132, which can be a GPS module of the vehicle system 110, detects a position of the vehicle 100. In combination with cartographic information, which, for example, is stored in the data storage device 124 in connection with a navigation application of the vehicle system 110, the detected position of the vehicle 100 is indicative of a road trajectory ahead of the vehicle 100. Additional conditions, such as topographical objects in the environment E, local weather, etc., which are indicative of an imminent driving situation, may also be contained in the cartographic information.

Based on the sensor data received from the sensors 130, 132, the control unit 120 determines an imminent driving situation of the vehicle 100. The imminent driving situation is determined by means of the control unit 120 regarding a potential relevance of the imminent driving situation to a likely behavior of the driver D of the vehicle 100 with respect to the imminent driving situation. The imminent driving situation is further determined regarding an advantageous control of the automatic aerodynamic device 140 in relation to both the imminent driving situation and the expected, i.e., likely, behavior of the driver D. For example, the control unit 120 determines the imminent driving situation with respect to a straight or curved trajectory of the road S ahead of the vehicle 100, a slipperiness of the road S, a lighting condition, and the like, as such conditions are indicative of a likely driving behavior of the driver D and a corresponding advantageous configuration of the active aerodynamic device 140.

In addition, or as an alternative, to the front camera 130 and the position sensor 132, other sensor types are used in other examples for determining the imminent driving situation. Suitable other sensor types include one or more cameras other than a front camera, a lidar sensor, a radar sensor and/or an ultrasound sensor, and the like, of the vehicle system 110. Moreover, in addition, or as an alternative, to the aforesaid examples, the imminent driving situation is determined in some examples in accordance with a time of day, a traffic situation, an environment E, a vehicle state, including any of various possible configurations of the active aerodynamic device 140, a driver state of the driver D, such as a detected fatigue level of the driver D, etc.

When the control unit 120 has determined the imminent driving situation, the control unit 120 determines an expected behavior of the driver D with respect to the imminent driving situation based at least partially on the determined imminent driving situation. For this purpose, a trained algorithm is used which has been trained based on previous behaviors of the driver D in other, for example, similar, driving situations. In some examples, the trained algorithm is obtained by performing a machine learning process on collected data relating to previous behaviors of the driver D and previous driving situations.

The use of the trained algorithm enables improved prediction of an expected behavior of the driver D with respect to the imminent driving situation. For example, different drivers exhibit different reaction patterns, have different preferences and/or different capabilities, including different levels of confidence, when operating the vehicle 100 with respect to an imminent driving situation. Using the trained algorithm facilitates that the driver's individual behavioral pattern is taken in account in determining the expected behavior of the driver D.

Based on the determined imminent driving situation and the expected behavior of the driver D, the control unit 120 determines a target setting of the active aerodynamic device 140. In some examples, the target setting of the active aerodynamic device 140 is determined such that a trade-off between steering performance, comfort, and economic energy usage of the vehicle 100, which typically correspond to different configurations of the active aerodynamic device 140, is optimized in accordance with a specific need corresponding to the imminent driving situation and/or with an individual preference of the driver D.

When the control unit 120 has determined the target setting of the active aerodynamic device 140, it controls the active aerodynamic device 140 in accordance with the target setting. For example, the control unit 120 generates a control signal based on the determined target setting and outputs the control signal to one or more actuators (not shown) of the active aerodynamic device 140 which are configured to adjust a configuration, such as a position, of the active aerodynamic device 140.

In the example of Fig. 1, the active aerodynamic device 140 comprises an active rear spoiler. In other examples, the one or more active aerodynamic devices 140 of the vehicle 100 comprise additionally, or alternatively, at least one of an active grille shutter, an active underbody front device, an active ride height and/or an active rear diffuser.

In some examples, the vehicle system 110 detects an actual behavior of the driver D with respect to the imminent driving situation, for example, when the imminent situation sets in. The control unit 120 then compares the detected actual behavior of the driver D with the expected behavior of the driver D which had been determined before with respect to the imminent driving situation. By analyzing the detected behavior of the driver D in this way, an accuracy and/or a reliability of the trained algorithm can be determined. Moreover, the trained algorithm can be continuously trained based on such analysis.

In some examples, the trained algorithm is stored by means of the storage device 124 of the control unit 120. In these examples, determining the expected behavior of the driver D can be performed by the control unit 120 in a fully vehicle-based manner. Thus, a connection of the vehicle system 110 to one or more servers via a communication network, for example, by means of the communication unit 150, for performing the method can be dispensed with.

Furthermore, where the trained algorithm is stored on-board the vehicle 100, in some examples, the control unit 120 receives via the communication module 150 updated algorithm data for the trained algorithm and updates the trained algorithm in accordance with the received updated algorithm data. In some examples, the updated algorithm data pertains to one or more updated types of driving situations, to updated classifying data for analyzing the obtained sensor data with respect to any of various possible imminent driving situations, and the like.

In some examples, the control unit 120 determines a present vehicle state of the vehicle 100. The present vehicle state of the vehicle 100 comprises a present configuration of the active aerodynamic device 140. The present configuration of the active aerodynamic device 140 can confine the range of possible configurations of the active aerodynamic device 140 which can be achieved by controlling the active aerodynamic device 140 until the imminent driving situation sets in. The range of achievable configurations can be confined due to an adjustment time which is required for changing from one configuration of the active aerodynamic device 140 to another configuration. In addition, in some examples, the present vehicle state comprises a present behavior of the driver D with respect to present control input operations, such as a present steering input and or present acceleration/deceleration input provided by the driver D to the vehicle system 110.

In some examples, the present vehicle state additionally, or alternatively, comprises a selectable drive mode of the vehicle 100. The driver D of the vehicle 100 may select among a group of drive modes, including economy, comfort, sport and/or racing. The selected drive mode is indicative of a current preference or need of the driver D regarding an overall performance of the vehicle 100. This can be advantageously considered in determining the target setting of the active aerodynamic device 140. Furthermore, the selected drive mode can affect functionalities of the vehicle system 110, because some functionalities can be automatically activated or deactivated, enhanced or reduced, etc., depending on the selected drive mode. This can be advantageously considered in determining the imminent driving situation.

Accordingly, in some examples, the control unit 120 determines at least one of the imminent driving situation, the expected behavior of the driver D, and/or the target setting of the active aerodynamic device 140 additionally based on the present vehicle state of the vehicle 100. Taking in account the selected drive mode allows for more accurately determining the likely, or expected, behavior, including a preference, of the driver D with respect to the imminent driving situation. In addition, the selected drive mode is indicative of the driver's D priority or preference regarding the trade-off between steering performance, comfort, and economy based on which the target setting can be determined.

In some examples, the method is performed repeatedly, such as continuously and/or at intervals. In examples in which the method is performed continuously or at relatively short intervals, a reaction of the driver D to an adjustment of the active aerodynamic device 140 as a result of a preceding cycle of performing the method can be determined, for example, when determining the present vehicle state, and can be considered in determining the expected behavior of the driver D during a subsequent cycle of performing the method. In this way, the method is performed in some examples in such manner that a 'closed loop' is created, including a controlling of the active aerodynamic device 140 based on an expected behavior of the driver D and, subsequently, determining an expected behavior of the driver D dependent on a previous controlling of the active aerodynamic device 140, and so on.

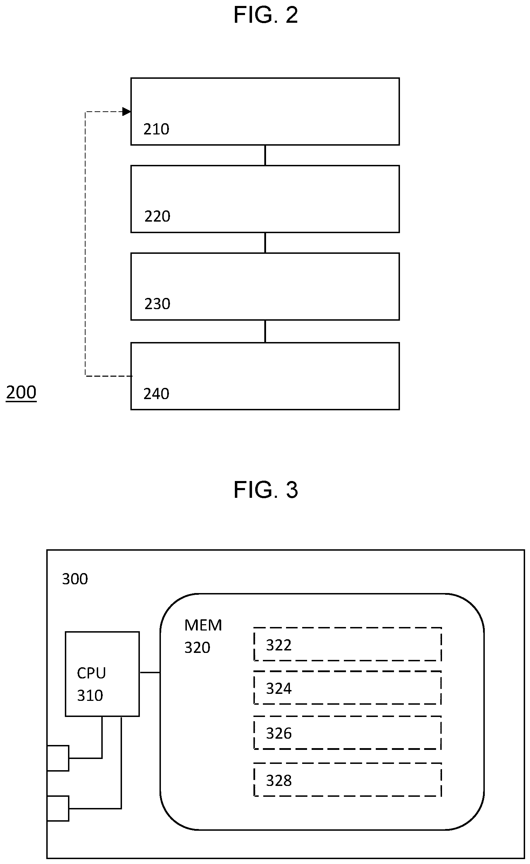

Fig. 2 shows a flow diagram of a method 200 of operating a vehicle system of a vehicle. The method 200 is executable, for example, by means of the vehicle system 110 shown in Fig. 1, as described above.

In particular, the method 200 comprises determining the imminent driving situation of the vehicle based at least partially on sensor data obtained by the vehicle system, step 210. The method 200 further comprises determining an expected behavior of the driver of the vehicle by means of the vehicle system with respect to the imminent driving situation using a trained algorithm, step 220. The trained algorithm has been trained based at least partially on previous driving situations and previous behaviors of the driver.

The method 200 also comprises determining a target setting of at least one active aerodynamic device of the vehicle by means of the vehicle system based at least partially on the imminent driving situation and the expected behavior of the driver, step 230. Furthermore, the method 200 comprises controlling the at least one active aerodynamic device by means of the vehicle system in accordance with the determined target setting of the at least one active aerodynamic device, step 240.

Furthermore, as indicated in Fig. 2 by the dashed arrow, the method 200 is in some examples performed repeatedly. Repeated performance of the method 200 includes in some examples dynamic, in particular, continuous, performance of the method 200 or a performance of the method 200 at predefined intervals.

Fig. 3 shows schematically and exemplarily a control unit 300 for a vehicle system of a vehicle. The control unit 300 comprises a processor 310 which is operatively connected to a memory device 320. Furthermore, the control unit 300 is configured to receive and/or output data signals via one or more interfaces, as schematically indicated in Fig. 3.

The memory device 320 stores program code which is executable by means of the processor 310. The control unit 300 is implementable by way of an on-board control unit, such as the control unit 120 of the vehicle system 110 in Fig. 1. In other examples, the control unit 300 is implemented at least partially at one or more network nodes which are in network communication with an on-board vehicle system to receive data from the vehicle system and or output and transmit generated data towards the vehicle system via a communication network.

The memory device 320 stores program code which, when executed by means of the processor 310, configure the control unit 300 to perform operations according to any of the examples described above in connection with Figs. 1 and 2.

In particular, the memory device 320 stores program code which, by interaction with the processor 310, constitute an imminent driving situation determining module 322 for determining an imminent driving situation of the vehicle based at least partially on sensor data obtained by the vehicle system. The memory device 320 further stores program code constituting an expected behavior determining module 324 for determining an expected behavior of a driver of the vehicle with respect to the imminent driving situation based at least partially on the imminent driving situation using a trained algorithm. The trained algorithm has been trained based at least partially on previous driving situations and previous behaviors of the driver. The memory device 320 further stores program code constituting a target setting determining module 326 for determining a target setting of at least one active aerodynamic device of the vehicle based at least partially on the imminent driving situation and the expected behavior of the driver. The memory device 320 further stores program code constituting an active aerodynamic device controlling module 328 for controlling the at least one active aerodynamic device in accordance with the determined target setting of the at least one active aerodynamic device.

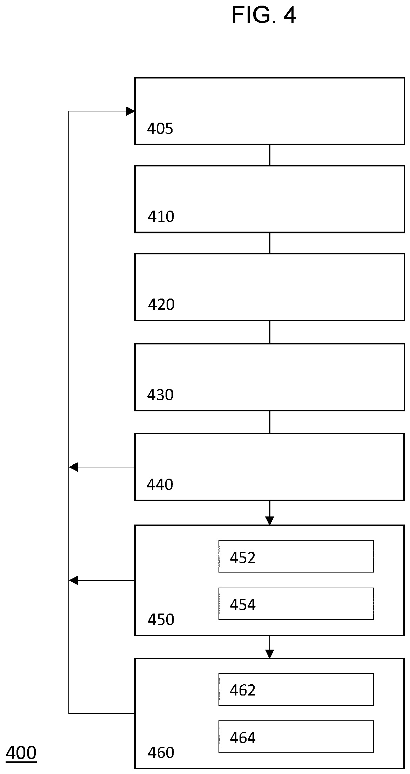

Fig. 4 shows a flow diagram of a method 400 of operating a vehicle system of a vehicle according to another example. The method 400 is executable, for example, by means of the vehicle system 110 according to some examples, as described above in connection with Fig. 1.

Steps 410 to 440 of the method 400 essentially correspond to steps 210 to 240 of the method 200, unless otherwise clear from the following. Analogous to the method 200, the method 400 includes determining an imminent driving situation of the vehicle, step 410, determining an expected behavior of the driver of the vehicle with respect to the imminent driving situation using a trained algorithm, step 420, determining a target setting of at least one active aerodynamic device of the vehicle, step 430, and controlling the at least one active aerodynamic device accordingly, step 440. In addition, as indicated by the arrow on the left of block 440, the aforesaid steps of the method 400 are performed repeatedly, for example, in the manner of a closed loop as described above.

Different from the method 200, the method 400 further comprises determining the present vehicle state of the vehicle by means of the vehicle system, step 405. As described for some examples in connection with Fig. 1, the determined present vehicle state is additionally used in at least one of the determining operations performed in any one of the steps 410 to 430.

The method 400 further comprises continuous training of the trained algorithm, step 450. To this end, the method 400 comprises detecting the (actual) behavior of the driver with respect to the imminent driving situation, step 452, and updating the trained algorithm based on the detected behavior of the driver by means of the vehicle system, step 454.

The method 400 further comprises an external updating of the trained algorithm, step 460. To this end, the method 400 comprises receiving updated algorithm data for the trained algorithm by a communication module of the vehicle system, step 462, and updating the trained algorithm in accordance with the received updated algorithm data, step 464.

At any instance before, during or after any one of a continuous training operation, step 450, or an external updating, step 460, the method 400 may be repeated in some examples, as indicated in Fig. 4 by the arrows originating on the left of each of the blocks 440, 450, 460.

## Claims

1. Method (200; 400) of operating a vehicle system (110) of a vehicle (100), the method comprising:
- determining (210; 410), by means of the vehicle system (110), an imminent driving situation of the vehicle (100) based at least partially on sensor data obtained by the vehicle system (110);
- determining (220; 420), by means of the vehicle system (110), an expected behavior of a driver (D) of the vehicle (100) with respect to the imminent driving situation based at least partially on the imminent driving situation using a trained algorithm, the trained algorithm trained based at least partially on previous driving situations and previous behaviors of the driver (D);
- determining (230; 430), by means of the vehicle system (110), a target setting of at least one active aerodynamic device (140) of the vehicle (100) based at least partially on the imminent driving situation and the expected behavior of the driver (D), and
- controlling (240; 440), by means of the vehicle system (110), the at least one active aerodynamic device (140) in accordance with the determined target setting of the at least one active aerodynamic device (140).

2. Method according to claim 1, further comprising:
- determining (405), by means of the vehicle system (110), a present vehicle state of the vehicle (100),
wherein at least one of determining (410) the imminent driving situation, determining (420) the expected behavior of the driver (D) and/or determining (430) the target setting of the at least one active aerodynamic device (140) is further performed based at least partially on the present vehicle state of the vehicle (100).

3. Method according to claim 2, wherein the present vehicle state comprises a selectable drive mode of the vehicle (100), the drive mode selected from a group of drive modes including at least one of economy, comfort, sport and/or racing.

4. Method according to any one of the preceding claims, further comprising:
- detecting (450, 452), by means of the vehicle system (110), a behavior of the driver (D) with respect to the imminent driving situation, and
- updating (450, 454), by means of the vehicle system (110), the trained algorithm based on the detected behavior of the driver (D).

5. Method according to any one of the preceding claims, wherein the trained algorithm is stored by means of an on-board device (120, 122, 124), in particular by means of a storage device (124) of an on-board control unit (120), of the vehicle system (110), and wherein determining (220; 420), by means of the vehicle system (110), the expected behavior of the driver (D) with respect to the imminent driving situation using the trained algorithm is performed by means of the on-board device (120, 122, 124), in particular by means of a processor (122) of the on-board control unit (120).

6. Method according to claim 5, further comprising:
- receiving (460, 462), via a communication module (150) of the vehicle system (110), updated algorithm data for the trained algorithm, and
- updating (460, 464), by means of the on-board device (120, 122, 124), the trained algorithm in accordance with the received updated algorithm data,
wherein the updated algorithm data pertains to at least one of the following:
- one or more updated types of driving situations, or
- updated classifying data for analyzing the obtained sensor data with respect to one or more driving situations.

7. Method according to any one of the preceding claims, wherein the at least one active aerodynamic device (140) comprises at least one of an active rear spoiler, an active grille shutter, an active underbody front device, an active ride height and/or an active rear diffuser of the vehicle (100).

8. Method according to any one of the preceding claims, wherein the method is performed repeatedly with respect to the determining-steps (210 - 230; 405 - 430) and the controlling-step (240; 440), and, optionally, wherein an imminence of the imminent driving situation corresponds to a period allowing for at least two performances of the determining-steps (210 - 230; 405 - 430) and the controlling-step (240; 440).

9. Method according to any one of the preceding claims, wherein the sensor data is obtained from at least one sensor (130, 132) of the vehicle system (110), the at least one sensor (130, 132) comprising at least one of a position sensor (132), a camera (130), a lidar sensor, a radar sensor and/or an ultrasound sensor.

10. Method according to any one of the preceding claims, wherein any one of the imminent driving situation and the previous driving situations is associated with one or more of a road trajectory, a road condition, a side wind condition, a time of day, a weather condition, a traffic situation, an environment (E), in particular a topographic environment, a vehicle state, in particular any of various possible settings of the at least one active aerodynamic device (140), and/or a driver state.

11. Method according to any one of the preceding claims, wherein any one of the expected behavior and the previous behaviors of the driver (D) includes at least one of an activity and/or a preference of the driver (D), and/or
wherein determining (220; 420) the expected behavior of the driver (D) based at least partially on the imminent driving situation comprises determining the expected behavior of the driver based at least partially on any of various possible settings of the at least one active aerodynamic device (140).

12. Method according to any one of the preceding claims, wherein determining (230; 430) the target setting of the at least one active aerodynamic device (140) is further performed based on a stored adjustment time of the at least one active aerodynamic device (140) for adopting a position in accordance with a received control signal.

13. Computer program product comprising portions of program code which, when executed by a processor (122; 310) of a vehicle system (110), configure the vehicle system (110) to perform the method according to any one of the preceding claims.

14. Vehicle system (110) comprising a processor (122; 310) and a storage device (124; 320) operatively coupled to the processor (122; 310), wherein the storage device (124; 320) comprises portions of program code which, when executed by the processor (122; 310), cause the vehicle system (110) to perform the method according to any one of claims 1 to 12.

15. Vehicle (100) comprising a vehicle system according to claim 14.
